Europäisches Patentamt

European Patent Office

Office européen des brevets

(11) Veröffentlichungsnummer: **0 382 882 A2**

# (12) EUROPÄISCHE PATENTANMELDUNG

(21) Anmeldenummer: 89111723.6

(22) Anmeldetag: 28.06.89

(51) Int. Cl.5: **G01N 15/02**

(30) Priorität: 16.02.89 DE 3904957

(43) Veröffentlichungstag der Anmeldung:
22.08.90 Patentblatt 90/34

(84) Benannte Vertragsstaaten:
DE FR GB IT NL

(71) Anmelder: **SALZGITTER INDUSTRIEBAU GMBH**
**Eisenhüttenstrasse 99**
**D-3320 Salzgitter 41(DE)**

(72) Erfinder: **Brandis, Udo**
**Alte Heerstrasse**
**D-3324 Haverlah(DE)**
Erfinder: **Klose, Reinhold, Dr.**
**Damm 1A**
**D-3344 Cramme(DE)**

(74) Vertreter: **Kaiser, Henning**
**SALZGITTER AG Patente und Lizenzen**
**Kurfürstendamm 32 Postfach 15 63 09**
**D-1000 Berlin 15(DE)**

(54) Verfahren und Vorrichtung zur rechnergesteuerten Analyse der Partikelgrössenverteilung.

(57) Die Erfindung betrifft ein Verfahren zur on-line Bestimmung der Partikelgrößenverteilung von in einer Flüssigkeit suspendierten Partikeln. Dazu wird eine repräsentative Probe entnommen, die Probe aus dem Probennehmer ausgespült, eine verdünnte Meßsuspension erzeugt und diese mittels eines Laserbeugungs-Spektrometers mit Durchflußküvette im Kreislauf geführt. Mittels steuerbaren Ventilen kann die gesamte Messung automatisch durchgeführt werden.

EP 0 382 882 A2

## Verfahren und Vorrichtung zur rechnergesteuerten Analyse der Partikelgrößenverteilung

Die Erfindung betrifft ein Verfahren und eine Vorrichtung zur rechnergesteuerten Partikelgrößenanalyse von in einer Flüssigkeit im wesentlichen homogen suspendierten Partikeln.

Das erfindungsgemäße Verfahren erfolgt mittels automatischer Probennahme, automatischer Probenaufbereitung, automatischer Analyse der Partikelgrößenverteilung und automatischer Spülung des Meßaufbaus zur Vorbereitung auf eine neue Messung. Das erfindungsgemäße Verfahren und die erfindungsgemäße Vorrichtung werden bei der Herstellung von Suspensionen und der Kontrolle der Eigenschaften der Suspensionen, insbesondere bei der Kontrolle der Partikelgrößenverteilung, die bei Misch- und Mahlprozessen erzeugt wird, angewendet. Bei derartigen Prozessen wie z. B. das Naßmahlen von Kohle zur Erzeugung pump- und förderungsfähiger Suspension aus Kohle und Wasser sowie gegebenenfalls weiteren Zusatzstoffen (Additiven) ist es in der Regel notwendig, eine bestimmte Partikelgrößenverteilung durch Regelung des Mahlprozesses für die Erzeugung einer gut förderungsfähigen Suspension einzustellen. Bei zahlreichen Misch- und Mahlprozessen werden große Mengen von Suspensionen erzeugt, die jeweils möglichst gleichbleibende Eigenschaften, z. B. möglichst gleichbleibende Viskosität haben müssen, damit die Förderfähigkeit der Suspension erhalten bleibt. Da die Viskosität einer Suspension unter anderem vor der Partikelgrößenverteilung abhängig ist, kommt es darauf an, bei den Herstellungsprozessen und deren Teilschritten zur Erzeugung der Suspension möglichst immer die gleiche, für das Produkt erforderliche Partikelgrößenverteilung einzustellen. Zu diesem Zweck muß die Partikelgrößenverteilung mit möglichst geringem Aufwand bestimmt werden. Außerdem ist, um den Produktionsprozeß, z. B. die Mischung oder Mahlung auf etwaige Änderungen der Partikelgrößenverteilung einstellen zu können, eine schnelle, möglichst kontinuierliche Bestimmung der Partikelgrößenverteilung mit einer Taktzeit zwischen den einzelnen Messungen erforderlich, die weniger als 5 Minuten, insbesondere nicht mehr als etwa 1 Minute betragen sollte. In DE 29 29 430 C2 wird vorgeschlagen, eine repräsentative Probe aus dem Strömungsquerschnitt einer von der Suspension durchströmten senkrechten Rohrleitung zu entnehmen, die Probe nötigenfalls zu verdünnen, die gegebenenfalls verdünnte Probe zu filtrieren und die ausgefilterten Teilchen mittels einer rechnergesteuerten lichtmikroskopischen Apparatur in Verbindung mit einem rechnergesteuerten Bildanalysesystem hinsichtlich der Partikelgrößenverteilung zu analysieren. Ein derartiges für hydraulische Förderleitungen entwickeltes Meßverfahren ist nicht für alle in der Praxis vorkommenden Anwendungsfälle geeignet, weil entlang der für den Transport verwendeten Rohrleitungen das Strömungsverhalten sich fortlaufend ändert und unter Umständen durch Reibung der Partikel an der Wand und untereinander die Korngrößenverteilung sich während des Transportes ändert. Zum anderen ist die Bestimmung der Partikelgrößenverteilung mittels der vorgesehenen Filterung und der lichtoptischen Analyse in Verbindung mit einem Bildverarbeitungssystem verhältnismäßig zeitaufwendig.

Aufgabe der Erfindung war, ein Verfahren sowie eine entsprechende Vorrichtung bereit zu stellen, die die Bestimmung beliebiger Partikelgrößenverteilungen praktisch im On-Line Betrieb also nur mit geringer zeitlicher Verzögerung und gegebenenfalls im Abstand weniger Minuten ermöglichen. Die Aufgabe wird durch die Ansprüche 1 und 3 gelöst. Erfindungsgemäße Weiterbildungen sind in den Unteransprüchen angegeben.

Die Verfahrensablauf des erfindungsgemäßen Verfahrens wird im folgenden anhand eines Beispiels für die Bestimmung der Partikelgrößenverteilung von in Wasser suspendierten Partikeln beschrieben. Zu Beginn jedes Meßzyklus wird zur Kalibrierung des Analysensystems eine "Nullmessung" mit von Feststoffteilchen weitestgehend gereinigtem Wasser durchgeführt. Statt des gereinigten Wassers kann vorteilhaft die Flüssigkeit verwendet werden, die zur Erstellung der Suspension verwendet wird. Soweit diese Flüssigkeit Verunreinigungen in Form von Partikeln enthält, die die Messung der Partikelgrößenverteilung verfälschen könnten, wird dies durch die Kalibrierung mit der für die Erstellung der Suspension verwendeten Flüssigkeit verhindert.

Für die Nullmessung wird der zur Erstellung der Meßsuspension dienende Behälter mit dem beispielhaft verwendeten gereinigten Wasser gefüllt und dieses in den Analysekreislauf gebracht. Nach oder während der Nullmessung wird der Probennehmer, der an einem Gestänge angebracht ist, durch Verschieben in Richtung der Probennehmerachse in die den Suspensionsstrom führende Rohrleitung geführt und eine repräsentative Probe entnommen. Nach Zurückführen des Probennehmers in seine Ausgangsposition wird die Probe in einem Spülbehälter vollständig aus dem Probennehmer ausgewaschen und nach Abschluß der Nullmessung in den Behälter zur Erstellung der Meßsuspension gespült. Durch das Einspülen der Probe in das in diesem Behälter von der "Nullmessung" noch vorhandene Wasserreservoir erfolgt eine erste an den Meßbereich der optischen Analyseeinheit angepaßte Verdünnung der Probe. Die beim Ausspülen der Probe aus dem Probennehmer und bei der Nullmessung zugegebenen Wassermengen sowie die bei einer gegebenenfalls notwendigen weiteren Verdünnung zugegebene Wassermenge werden gegebenenfalls genauestens registriert, um, soweit dies erforderlich ist, von der gemessenen Konzentration auf die im Suspensionsstrom vorhandene Partikelkonzentration zurückschließen zu können.

Im allgemeinen wird nach Vorversuchen die für die Bestimmung der Partikelgrößenverteilung notwendige Verdünnung, d. h. das Verhältnis aus Probenvolumen und aus Volumen des im Behälter zur Erstellung der Meßsuspension vorhandenen Wassers, bekannt sein. Dann ist eine weitere Verdünnung nicht mehr erforderlich, wodurch die Taktzeit verringert wird. Typischerweise beträgt die Verdünnung 1 : 1.000 bis 1 : 15.000. In dem Behälter zur Erstellung der Meßsuspension wird durch geeignete Rührverfahren ein Absinken der suspendierten Partikel verhindert.

Einerseits wird, z. B. durch einen mechanischen Rührer, der Feststoffanteil der Meßsuspension stationär, d. h. zeitlich konstant, gehalten. Andererseits wird die Partikelgrößenverteilung dadurch stationär gehalten, daß eine Agglomeration der Partikel, z. B. durch Ultraschallbestrahlung geeigneter Intensität, verhindert wird. Aus diesem Behälter wird vorzugsweise mittels einer Schlauchpumpe die Meßsuspension im Kreislauf durch die Küvette des Analysensystems geführt.

Die Bewegung der Meßsuspension mittels Rührer im Behälter zur Erstellung der Meßsuspension und mittels der vorzugsweise eingesetzten Schlauchpumpe wird so gesteuert, daß möglichst keine Luftbläschen, die die Messung der Partikelgrößenverteilung stören würden, in den Analysenkreislauf gelangen. Zur Vermeidung von Luftbläschen, aber auch um vergleichbare Meßbedingungen zu erhalten, ist die Verwendung von angewärmtem Wasser konstanter Temperatur zweckmäßig. Falls notwendig wird die Meßsuspension soweit durch in den Behälter zur Erstellung der Meßsuspension zugeführtes Wasser verdünnt, daß eine Messung der Teilchengrößenverteilung mit dem auf bestimmte maximale Partikelkonzentrationen beschränkten optischen Analysesystem ermöglicht wird. Für diesen Fall dienen die am Behälter zur Erstellung der Meßsuspension angebrachten Rühreinrichtungen dazu die Meßsuspension zu homogenisieren. Durch die Umwälzung der Meßsuspension und die damit verbundene kontinuierliche Bestimmung der Partikelgrößenverteilung ist es möglich, mit der Begrenzung einer vertretbaren Meßzeit, eine beliebig große Anzahl von Messungen durchzuführen und damit zu Ergebnissen von ausreichender statistischer Sicherheit zu kommen. Nach Abschluß der Messung kann diese beliebig oft wiederholt oder das gesamte System leergepumpt und gespült werden, wonach ein neuer Meßzyklus beginnen kann. Die gesamte Messung wird durch eine geeignete Datenverarbeitungsanlage gesteuert. Die Steuerung der Messung durch die Datenverarbeitungsanlage ist auf möglichst geringe Taktzeit optimiert.

Die Entnahme einer repräsentativen Probe erfolgt vorzugsweise, indem der Probennehmer zunächst verdeckt an den Ort der Probennahme gefahren und dort mit der Probe gefüllt wird. Die Entnahme einer repräsentativen Probe ist bei Suspension besonders wichtig, da bei dessen, speziell bei typischerweise inhomogenen Strömungsfeldern, eine nachträgliche Probenteilung in repräsentative Probenteile nicht möglich ist.

Die in der schematischen Darstellung gezeigte Vorrichtung besteht aus einer Probennahmeeinrichtung 1, einer Spüleinrichtung 2, einer Einrichtung zur Erstellung der Meßsuspension 3, einer Schlauchpumpe 4 und einem Laserbeugungs-Spektrometer 5.

Die Probennahmeeinrichtung 1 besteht aus dem an einem Gestänge angebrachten zylindrischen Probennehmer 11, der eine in Längsachse des Zylinders verlaufende Nut aufweist und einer pneumatische und/oder elektrischen Dreh- und Stelleinrichtung 12, 13, mit der der Probennehmer 11 in die Suspension hineingefahren und aus ihr heraus in die Spüleinrichtung 2 eingebracht werden kann. Beim Einfahren in die die Suspension führende Rohrleitung 7 oder einen Freistrahl wird der Probennehmer 11 so gedreht, daß die Nut zunächst von der Strömungsrichtung abgewandt ist und erst am Ort der Probenahme der Strömungsrichtung zugewandt wird. Danach wird der Probennehmer durch Verschiebung mit der pneumatischen und/oder elektrischen Stelleinrichtung 13 in den Spülbehälter 22 eingebracht und die Probe mittels der im Spülbehälter angebrachten Waschdüsen 23 vollständig aus dem Probennehmer 11 ausgespült. Von dem Spülbehälter 22 gelangt die Probe in den Behälter zur Erstellung der Meßsuspension 31 an dem geeignete Rühreinrichtungen, wie z. B. Blatt- oder Flügelrührer 32 und Schwingerelemente des Ultraschallgenerators 33 angebracht sind. Aus dem Behälter zur Erstellung der Meßsuspension 31 wird vorzugsweise mittels einer Schlauchpumpe 4 die Meßsuspension durch die Meßküvette 51 eines Laserbeugungs-Spektrometers 5 geführt, das die Bestimmung der Partikelgrößenverteilung aufgrund der von der Größe der einzelnen Partikel abhängigen Lichtbeugung ermöglicht. Solange die Messung erforderlich ist, läuft die Meßsuspension nach der Meßküvette 51 in den Behälter zur Erstellung der Meßsuspension zurück. Steuerbare Ventile 61, 62, 63 für die Zufuhr von Wasser zu den Waschdüsen 23 und die Verdünnung der Meßsuspension sowie das Spülen des gesamten Meßaufbaus und den Ablauf sind für eine vollständig automatisierte Vorrichtung vorgesehen. Hierbei erfolgt die Steuerung des Meßablaufs, die Auswertung der Meßwerte und die Protokollierung der Messung und der Meßergebnisse für eine geeignete Rechner- oder Steuereinheit

3

In einem Ausführungsbeispiel beträgt das Probennahmevolumen des Probennehmers 11 für die Probennahme aus einer Kohle-Wasser-Suspension (70% Feststoffanteil) etwa 3 cm³, das Volumen des Behälters zur Erstellung der Meßsuspension 31 etwa 15 l und die Pumpgeschwindigkeit, mit der die Meßsuspension durch die Meßküvette 51 geführt wird, etwa 1 m/s (horizontal).

Das zur Erstellung der Meßsuspension und für die Nullmessung verwendete Wasser wird in diesem Beispiel aus der gleichen Quelle genommen, wie das Wasser, das zur Erstellung der Kohle-Wasser-Suspension dient. Dadurch werden bei der Kalibrierung des Laserbeugungs-Spektrometers während der Nullmessung der Einfluß von im Wasser enthaltenen Verunreinigungen auf die Messung der Partikelgrößenverteilung weitestgehend eliminiert. Das zur Erstellung der Meßsuspension verwendete Wasser wurde außerdem, zur Vermeidung von Blasenbildung in der Meßsuspension auf etwa 30° angewärmt. Hierdurch wird insbesondere auch vermieden, daß in der Meßküvette im Durchstrahlungsbereich des Fensters von etwa 10 x 10 cm Gasbläschen an den Innenwänden der Küvette gebildet werden.

Bei einer Meßzeit von 60 s und einer daran anschließenden Auswertungszeit von wenigen Sekunden steht das Ergebnis der Partikelgrößenanalyse praktisch on-line zur Verfügung. Dabei kann der Bereich der Partikelgrößen in der analysierten Partikelgrößenverteilung mehrere Zehnerpotenz überstreichen. In dem folgenden Beispiel eines Ergebnisses der Partikelgrößenanalyse bedeutet (Tabelle 1) X die Partikelgröße in Mikrometer und Q die Summenhäufigkeit in Prozent.

Tabelle 1

| X | Q | X | Q |
|---|---|---|---|
| 1.80 | 3.21 | 30.00 | 50.74 |
| 2.20 | 4.22 | 36.00 | 57.74 |
| 2.60 | 5.25 | 42.00 | 68.75 |
| 3.00 | 6.27 | 50.00 | 70.47 |
| 3.60 | 7.77 | 60.00 | 77.14 |
| 4.40 | 9.67 | 72.00 | 88.17 |
| 5.20 | 11.45 | 86.00 | 88.33 |
| 6.20 | 13.52 | 102.00 | 92.84 |
| 7.40 | 15.80 | 122.00 | 97.11 |
| 8.60 | 17.98 | 146.00 | 100.00 |
| 10.00 | 20.85 | 174.00 | 100.00 |
| 12.00 | 23.82 | 206.00 | 100.00 |
| 15.00 | 29.01 | 246.00 | 100.00 |
| 18.00 | 33.96 | 294.00 | 100.00 |
| 21.00 | 38.51 | 350.00 | 100.00 |

Das Verfahren und die Vorrichtung sind für beliebige Suspensionen einsetzbar, die feine Feststoffpartikel und eine geeignete Trägerflüssigkeit enthalten. Die Verdünnung der Probe zur Bildung der Meßsuspension braucht nur soweit zu erfolgen, wie es für eine einwandfreie Messung durch das verwendete Laserbeugungs-Spektrometer erforderlich ist. Der Kreislauf der Meßsuspension durch den Behälter 31 und die Meßküvette kann solange aufrechterhalten werden, bis eine ausreichende Anzahl von Partikeln der unterschiedlichen Größen ermittelt wurde und sich die anteiligen Mengen von Partikeln in den abgestuften Größenbereichen praktisch nicht mehr verändern. Dieser Fall kann z. B. auch schon eintreten, wenn nur ein Teil der ursprünglich in dem Behälter vorhandenen, homogenen Meßsuspension die Meßküvette 51 durchflossen hat, so daß sich die eigentliche Partikelgrößenanalyse auf wenige Sekunden verkürzt und der gesamte Zyklus einschließlich Entnahme einer Probe von 0,5 bis etwa 3 cm³ und des Spülvorgangs nicht wesentlich mehr als 1 Minute dauert. Damit ist beinahe eine kontinuierliche Uberwachung der Feststoffsuspension möglich. Im Normalfall wird jedoch eine Probenahme im Abstand von z. B. 5 bis 30 min ausreichen. Vergleichsmessungen mit derselben Probe in mit zeitlichem Abstand aufeinander folgenden vollständigen Zyklen ergaben, daß die Abweichungen der Meßergebnisse kleiner als 1% waren, so daß die erfindungsgemäße Partikelgrößenermittlung als sehr genau anzusehen ist.

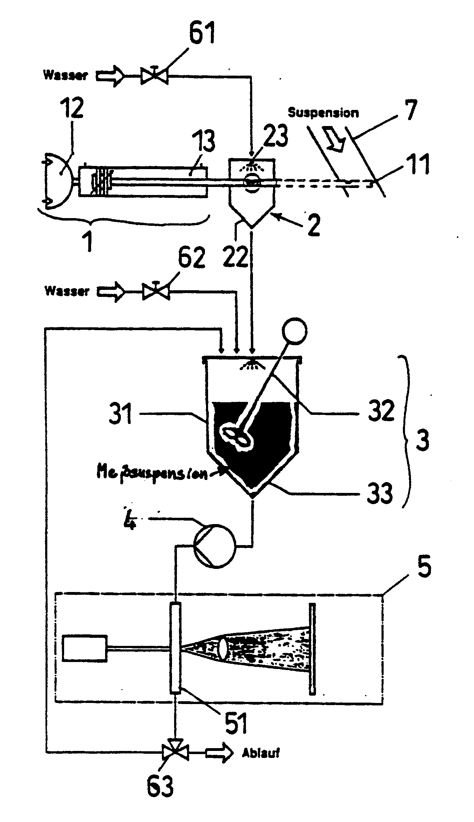

**Ansprüche**

1. Verfahren zur rechnergesteuerten Analyse der Partikelgrößenverteilung von in Flüssigkeiten im wesentlichen homogen suspendierten Partikeln mittels Probennahme und Erstellung einer Meßsuspension an der die Bestimmung der Partikelgrößenverteilung mittels eines optischen Verfahrens erfolgt, dadurch gekennzeichnet, daß in kürzest möglicher Zeit

a) die entnommene Probe in einen zur Herstellung der Meßsuspension geeigneten Behälter eingebracht wird,

b) die Meßsuspension in Abstimmung mit dem Auflösungsvermögen der optischen Analyseeinheit verdünnt wird,

c) der Feststoffanteil der Meßsuspension und die Partikelgrößenverteilung durch Bewegung der Meßsuspension im wesentlichen stationär gehalten wird,

d) die Meßsuspension im Kreislauf durch den Meßsuspensionsbehälter und durch die optische Analyseeinheit geführt wird,

e) vor einer Bestimmung der Partikelgrößenverteilung eine Kalibrierung der optischen Analyseeinheit mittels der reinen Flüssigkeit erfolgt mit der die Meßsuspension gebildet wird,

f) Meßwerte der optischen Analyseeinheit an einen die Anlage steuernden Rechner zur Auswertung übergeben werden,

g) nach einer Bestimmung der Partikelgrößenverteilung der Meßsuspensionsbehälter sowie der Kreislauf durch die optische Analyseeinheit gespült wird.

2. Verfahren nach Anspruch 1, dadurch gekennzeichnet, daß zur Messung der Partikelgrößenverteilung, der Probennehmer verdeckt a den Ort Probenahme im Flüssigkeitsstrom gefahren wird und die Probenahme erst nach erreichen des gewünschten Ortes Probenahme erfolgt und der Probennehmer anschließend zum vollständigen Herausspülen der entnommenen Probe über Waschdüsen in einem Spülbehälter entleert wird.

3. Verfahren nach Anspruch 1 oder 2, dadurch gekennzeichnet, daß das Verhältnis von Probenvolumen zu Volumen der Meßsuspension auf etwa ein Verhältnis 1: 1.000 bis 1 : 15.000 eingestellt wird.

4. Verfahren nach einem der Ansprüche 1 bis 3, dadurch gekennzeichent, daß die Meßsuspension zur Einstellung einer im wesentlichen stationären Partikelgrößenverteilung einer die Agglomeration von Partikeln verhindernden Ultraschallbestrahlung ausgesetzt wird.

5. Vorrichtung zur Durchführung des Verfahrens nach Anspruch 1, dadurch gekennzeichnet, daß

a) der Probennehmer (11) als Hohlkörper ausgebildet ist,

b) Verstelleinrichtungen (12, 13) vorhanden sind, mit denen der Probennehmer in den die suspendierten Partikel enthaltenden Flüssigkeitsstrom herein und aus diesem herausbewegt werden kann,

c) ein Spülbehälter (22) mit Waschdüsen vorgesehen ist, um die entnommene Probe aus dem Probennehmer (11) zu spülen,

d) nach dem Spülbehälter (22) ein Behälter (31) mit Rühreinrichtungen (32, 33) angeordnet ist, um eine verdünnte Meßsuspension zu erzeugen,

e) ein Laserbeugungs-Spektrometer (5) mit einer Meßküvette (51) vorgesehen ist,

f) wenigstens eine Pumpe (4) zur Aufrechterhaltung eines Kreislaufs durch den Behälter (31) zur Erstellung der Meßsuspension und durch d ie Meßküvette (51) vorhanden ist.

6. Vorrichtung nach Anspruch 5, dadurch gekennzeichnet, daß der Probennehmer (11) als aus einem Zylinder gefräste Nut ausgebildet ist.

7. Vorrichtung nach Anspruch 5, dadurch gekennzeichnet, daß die Verstelleinrichtungen (12, 13) zur Bewegung des Probennehmers für translatorische und rotatorische Bewegungen ausgebildet sind.

8. Vorrichtung nach Anspruch 7, dadurch gekennzeichnet, daß die Verstelleinrichtungen (12, 13) pneumatische Verstelleinrichtungen sind.

9. Vorrichtung nach Anspruch 7, dadurch gekennzeichnet, daß die Verstelleinrichtungen (12, 13) elektrische Verstelleinrichtungen sind.

10. Vorrichtung nach Anspruch 5, dadurch gekennzeichnet, daß die Rühreinrichtung an den Behälter (31) für die Erstellung der Meßsuspension aus wenigstens einem Rührer (32) und wenigsten einem Ultraschallgenerator (33) bestehen.

11. Vorrichtung nach einem der Ansprüche 5 bis 10, dadurch gekennzeichnet, daß ein Rechner mit der Probennahmeeinrichtung (1), der Spüleinrichtung (2), der Einrichtung zur Erstellung der Meßsuspension (3), der Pumpe (4), dem Laserbeugungs-Spektrometers (5) und mit den Ventilen (61, 62, 63) zur Steuerung der Vorrichtung und zur Auswertung der Meßergebnisse verbunden ist